# EUROPÄISCHE PATENTSCHRIFT

(11) **EP 0 779 093 B1**
(45) Veröffentlichungstag und Bekanntmachung des Hinweises auf die Patenterteilung: **12.02.2003**
(21) Anmeldenummer: 96117577.5
(22) Anmeldetag: 02.11.1996
(51) Int. Cl.: B01D 53/94, B01J 23/00

(54) **Verwendung eines Spinellkatalysators**
Use of a spinel based catalyst
Application d'un catalyseur à base de spinelle

(30) Priorität: 13.12.1995 DE 19546481
(43) Veröffentlichungstag der Anmeldung: 18.06.1997
(73) Patentinhaber: DaimlerChrysler AG, 70567 Stuttgart (DE); BASF AKTIENGESELLSCHAFT, 67056 Ludwigshafen (DE)
(72) Erfinder: Hartweg, Martin, Dr., 89153 Erbach (DE); Seibold, Andrea, 89134 Blaustein (DE); Walz, Leonard, Dr., 76437 Rastatt (DE); Fetzer, Thomas, Dr., 67346 Speyer (DE); Morsbach, Bernd, 67069 Ludwigshafen (DE)

(56) Entgegenhaltungen:
- EP-A- 0 676 232
- EP-A- 0 685 253
- DE-A- 4 301 470
- US-A- 4 274 981

## Beschreibung

Die Erfindung betrifft die Verwendung eines Katalysators zur katalytischen Reduktion von Stickoxiden in sauerstoffhaltigen Abgasen von Diesel- oder Magermixmotoren, welcher Katalysator aus einem Kupferoxid-Zinkoxid-Aluminiumoxid Spinell der chemischen Formel Cu_{A}Zn_{B}Al_{C}O₄ besteht und welcher Spinell als solches aus der EP 685253 A als bekannt hervorgeht.

Aus dem älteren Recht EP 685253 A ist die Verwendung eines Katalysators zur katalytischen Reduktion von Stickoxiden in Abgasen von Verbrennungsmaschinen bekannt, welcher Katalysator aus einem Kupferoxid-Zinkoxid-Aluminiumoxid Spinell der chemischen Formel Cu_{A}Zn_{B}Al_{C}O₄ besteht und einen Trägerkörper aus einem Zeolith aufweist. Allerdings ergeben sich mit diesem Katalysator ohne die gleichzeitige Verwendung des zeolithischen Trägerkörpers zumindest bei tiefen Temperaturen keine befriedigende Resultate hinsichtlich der Reduktion von Stickoxiden in sauerstoffreichen Abgasen, wie sie insbesondere bei Diesel- oder Magermixmotoren vorliegen.

Aus der EP 676 232 A ist die Beifügung von von verschiedenen Elementen, einschließlich Pt, Pd, Rh und seltenen Erden in einem Spinell-Katalysator zur Reinigung von Gasen, die CO, HC und NOx enthalten, bekannt.

Aus der DE 43 01 470 Al ist ein CuAl₂O₄-Spinell bekannt, das unter Zusatz von Zinn, Blei, einem Element der II. Haupt- oder Nebengruppe des Periodensystems der Element als Oxid oder Salz oder in elementarer Form und anschließendem Calzinieren zu einem Spinell vereinigt wird. Das derart vorbekannte Spinell wird zur Zersetzung von Lachgas (N₂O) eingesetzt. Die Verwendung dieses Katalysators hinsichtlich einer katalytischen Oxidation von CO zu CO₂ und/oder zur katalytischen Reduktion von NOx, bevorzugt von NO und NO2, insbesondere bei Temperaturen von mehreren 100 °C ist nicht bekannt.

Im Sinne der Erfindung ist unter einem Spinell ein Material der allgemeinen chemischen Formel AₐB_{b}O₄ zu verstehen, das zumindest mikroskopisch eine kristallographische oder kristallähnliche kubische Gitterstruktur mit flächenzentriert angeordneten Sauerstoffionen und tetraedrischen und oktaedrischen Lücken aufweist. In den tetraedrischen Lücken sind die A-Teilchen und bis zu 50% der B-Teilchen und in den oktaedrischen Lücken die restlichen B-Teilchen angeordnet. Dabei bezeichnet ein A- bzw. B-Teilchen nur deren kristallographische Anordnung. In stofflicher Hinsicht können die A-, wie auch die B-Teilchen unterschiedlich zueinander sein.

Aus Gründen des Umweltschutzes ist die Reinigung von Gasen, insbesondere von Abgasen, wie sie bspw. bei Verbrennungsmotoren und hier vor allem bei Diesel- oder Magermixmotoren anfallen, neben der Verringerung von CO u.a. deren Entstickung, also der Abbau von Stickoxiden (NOx) ein vordringliches Problem.

Aus der EP 042 471 B1 ist ein zur katalytischen Oxidation von Kohlenmonoxid (CO) zu Kohlendioxid (CO₂) verwandter Katalysator bekannt, der die Metalle Kupfer (Cu), Zink (Zn) und Aluminium (Al) als Metalloxide aufweist. Zumindest 60% des vorhandenen Cu ist an das Al-Oxid als Kupferoxid-Aluminiumoxid-Spinell gebunden. In den Freiräumen des porösen Spinells ist Zn-Oxid mit einem Gewichtsanteil zwischen 1% bis 20% angeordnet.

Von dem aus der EP 042 471 B1 vorbekannten Katalysator ist allerdings nur seine reinigende Wirkung bzgl. des CO's bekannt, die auf einer katalytischen Oxidation des CO's beruht. Ob der Katalysator gleichfalls zur Reinigung von NOx und/oder Kohlenwasserstoffen aufweisenden Gasen, wie sie insbesondere bei den obengenannten Brennkraftmaschinen und bspw. auch in Verbrennungskraftwerken und dgl. anfallen, geeignet ist, ist nicht bekannt.

Die Aufgabe der Erfindung ist es, den gattungsgemäß zugrundegelegte Verwendung eines Katalysators dahingehend weiterzuentwickeln, daß er bei tiefen Temperaturen und bei einer möglichst guten Stabilität gegenüber den Bestandteilen von Abgasen eine gute Reinigungswirkung insbesondere bei NOx aufweist.

Die Aufgabe wird bei einem Verwendung erfindungsgemäß durch die Merkmale des Anspruchs 1 gelöst. Durch die Verwendung eines zeolithfreien Cu_{A}Zn_{B}Al_{C}O₄-Spinells (mit A + B + C kleiner gleich 3 und A, B, C >0), dem zusätzlich noch mit einem oder mehrere der Elemente Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide imprägniert ist, als Katalysator, ist der Katalysator überraschender Weise gegenüber den Bestandteilen der Abgase wie bspw. H₂O, NOx, CO₂ und/oder SO₂ weitgehend stabil, wobei er auf Kohlenwasserstoffe oxidierend und auf das NOx katalytisch reduzierend wirkt. Die Reduktion von NOx findet in sauerstoffhaltigem Gas und in Anwesenheit von Reduktionsmitteln, wie z.B. eben genannten Kohlenwasserstoffen statt. Vorteilhafterweise liegen Kohlenwasserstoffe in Abgasen von Verbrennungsmotoren in genügender Konzentration vor. In günstigen Fällen können bei Temperaturen oberhalb 300 °C Reduktionsraten über 60 % erreicht werden.

Im Sinne der Erfindung sind als Spinelle auch unterstöchiometrische Verbindungen anzusehen, bei denen das Al₂O₃ als Matrix fungiert und die im Röntgenspektrum die charakterischtischen Spinelllinien aufweisen, wobei der Spinell der formalen Zusammensetzung AAl₂O₄ in einer Al₂O₃ Matrix vorliegt, so daß sich formal eine Stöchiometrie von A(1-x)Al₂O₄ ergibt.

Zweckmäßige Ausgestaltungen der Erfindung sind den Unteransprüchen entnehmbar. Im übrigen wird die Erfindung anhand eines Ausführungsbeispieles, dessen Messungen in den beiliegenden Figuren als Diagramm dargestellt sind, beschrieben. Dabei zeigt
- Fig. 1: ein Diagramm einer NOx(NO)-Reduktion über der Temperatur bei einem 20 % ZnO, 16% CuO und 64 % Al₂O₃ und zusätzlich eine Spinell-Struktur aufweisenden Gemenge, das mit 8 Gew.-% CeO₂ imprägniert ist und
- Fig. 2: ein Diagramm einer NOx(NO)-Reduktion über der Temperatur bei einem 20 % ZnO, 16% CuO und 64 % Al₂O₃ und zusätzlich eine Spinell-Struktur aufweisenden Gemenge, das zusätzlich 0.5 Gew.-% Paladium aufweist.

### Beispiel 1 )

Als Spinell wird eine eine Spinellstruktur aufweisendes Gemenge der Zusammensetzung 20% ZnO, 16% CuO, und 64% Al₂O₃ verwandt, der zusätzlich 8 Gew.-% CeO₂ imprägniert ist. Zur Herstellung dieses Spinells wird, ausgehend von einem ZnCuAl₂O₄-Spinell, der Spinell mit 8 Gew.-% CeO₂ imprägniert.

Von dem Spinell werden 10 Gramm Split in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wird ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht.

Hinter dem Reaktor wird die NO-Konzentration mit einem Gasdetektor gemessen, wobei vor der Detektion eventuell gebildetes NO₂ in einem Konverter zu NO reduziert wird. Simultan wird eine Oxidation von Kohlenwasserstoffen zu CO₂ durch Messung des CO₂-Gehalts durch den Gasdetektor beobachtet.

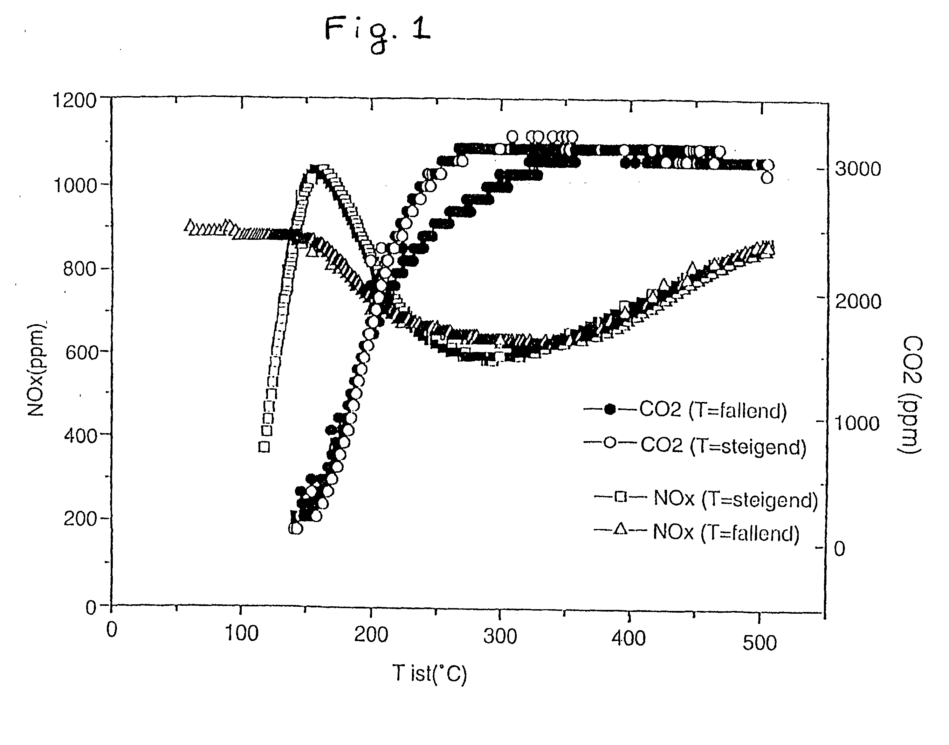

Das Ergebnis der Messung des mit 8 Gew.-% impränierten ZnCuAl₂O₄-Spinells gemäß Beispiel 2 ist in Figur 1 in einem Diagramm dargestellt. Der Verlauf des NOx(NO)- und des CO₂-Anteils in ppm ist als Funktion der Temperatur aufgetragen, wobei die NOx-Konzentration und die CO₂-Konzentration unterschiedlich gezeichnet sind.

In dem Diagramm ist eine deutliche Abnahme der NOx(NO)-Konzentration mit zunehmender Temperatur erkennbar, die bei ca. 300 °C einen Tiefpunkt erreicht und anschließend wieder ansteigt.

Für den ZnCuAl₂O₄-Spinell + 8 Gew.-% CeO₂ wird ab ca. 200 °C eine drastische Abnahme der NOx-Konzentration beobachtet, wobei gleichzeitig die Kohlenwasserstoffe zu CO₂ umgesetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 200 °C und 500 °C.

Günstigerweise liegt das angegebene Temperaturintervall bei etwa den Temperaturen, die in einem Abgasstrang eines Auspuffes einer Verbrennungskraftmaschine auftreten können.

Da der Spinell nach Beispiel 1 ebenfalls bei relativ niedrigen Temperaturen ein gutes Ansprechverhalten aufweist, ist auch er insbesondere zum Einsatz als NOx-Abgaskatalysator bei Brennkraftmaschinen und hierbei vorzugsweise von Dieselmotoren geeignet.

Weitere Untersuchungen an diesem Katalysator ergaben auch hier eine hohe Beständigkeit gegenüber NOx, H₂O, CO₂ und H₂O.

### Beispiel 2)

Als Spinell wird der obige ZnCuAl₂O₄-Spinell verwandt, der mit 0.5% Paladium imprägniert ist. Von dem Spinell werden 10 Gramm Split in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wird ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wird die NO-Konzentration mit einem Gasdetektor gemessen, wobei vor der Detektion eventuell gebildetes NO₂ in einem Konverter zu dem Stickoxid NO reduziert wird. Simultan wird eine Oxidation von Kohlenwasserstoffen zu CO₂ durch Messung des CO₂-Gehaltes durch den Gasdetektor beobachtet.

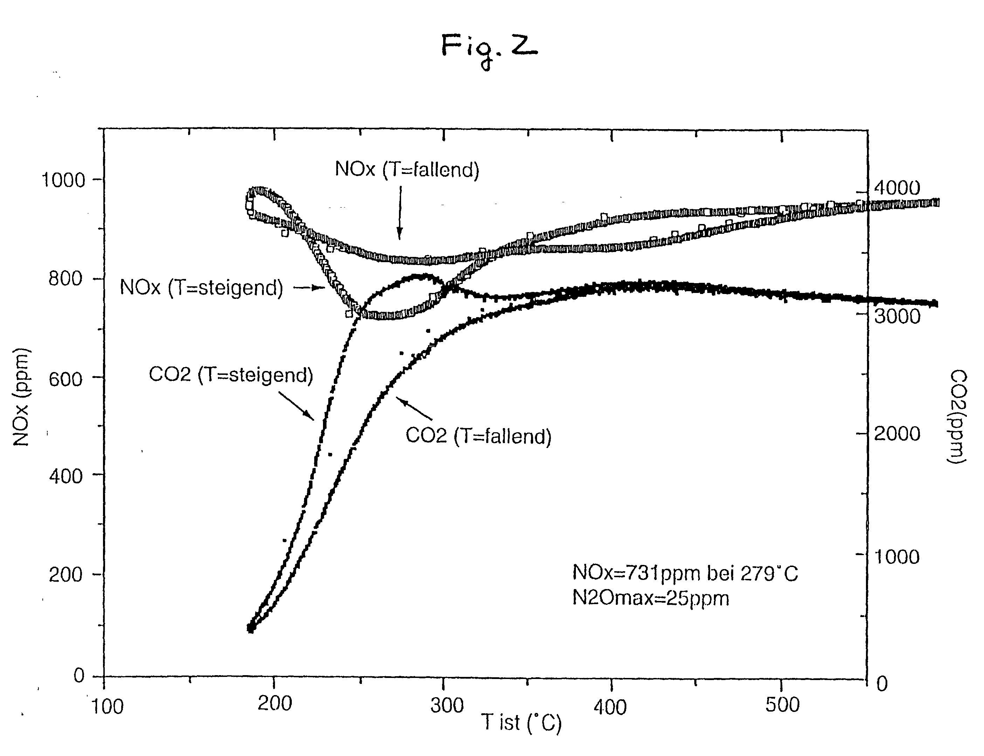

Das Ergebnis der Messung des Spinells gemäß Beispiel 2 ist in Figur 2 in einem Diagramm dargestellt. Der Verlauf des NO- und des CO₂-Anteils in ppm ist als Funktion der Temperatur aufgetragen, wobei die NOx-Konzentration und die CO₂-Konzentration unterschiedlich gekennzeichnet sind. In dem Diagramm ist eine deutliche Abnahme der NOx(NO)-Konzentration mit zunehmender Temperatur erkennbar, die bei ca. 280 °C einen Tiefpunkt erreicht und anschließend wieder ansteigt. Für den ZnCuAl₂O₄-Spinell + 0.5 Gew.-% Pd wird ab ca. 180 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 180 °C und 500 °C.

Günstigerweise liegt auch dieses Temperaturintervall bei etwa den Temperaturen, die in einem Abgasstrang eines Auspuffes einer Brennkraftmaschine auftreten können.

## Patentansprüche

1. Verwendung eines Katalysators zur katalytischen Reduktion von Stickoxiden in sauerstoffhaltigen Abgasen von Diesel- oder Magermixmotoren, welcher Katalysator aus einem Kupferoxid-Zinkoxid-Aluminiumoxid Spinell der chemischen Formel
Cu_{A}Zn_{B}Al_{C}O₄
besteht, der zusätzlich noch mit einem oder mehreren der Elemente Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide imprägniert ist, wobei gilt:
A + B + C kleiner gleich 3 und A > 0, B > 0, und C > 0.

2. Verwendung eines Katalysators nach Anspruch 1,
**dadurch gekennzeichnet,**
**daß** der Katalysator ein Kupferoxid-Zinkoxid-Aluminiumoxid-Spinell der chemischen Formel
Cu_{(1-B)}Zn_{B}Al₂O₄
aufweist, wobei gilt: 0 < B < 1 mit B>0.

3. Verwendung eines Katalysators nach Anspruch 1,
**dadurch gekennzeichnet,**
**daß** der Katalysator ein Kupferoxid-Zinkoxid-Aluminiumoxid-Spinell mit der chemischen Formel aufweist.

4. Verwendung eines Katalysators nach Anspruch 1,
**dadurch gekennzeichnet,**
**daß** das Spinell als Formkörper, bspw. Split Villsztrang, Hohlstrang usw und insbesondere als Wabenkörper, eingesetzt ist.

5. Verwendung eines Katalysators nach Anspruch 1,
**dadurch gekennzeichnet,**
**daß** der Gewichtsanteil des Ceroxids zwischen 0.5 und 15 Gewichtsprozent, insbesondere zwischen 1 und 8 Gew.-% beträgt.

## Claims

1. The use of a catalyst for the catalytic reduction of nitrogen oxides in oxygenous exhaust gases from diesel or lean mixture engines, said catalyst consisting of a copper oxide/zinc oxide/aluminium oxide spinel with the chemical formula
Cu_{A}Zn_{B}Al_{C}O₄,
which is also impregnated with one or more of the following elements: palladium, platinum, rhodium, ruthenium, osmium, iridium, rhenium and/or rare earths such an lanthanum and cerium, vanadium, titanium, niobium, molybdenum, wolfram and/or their salts and/or their oxides, where:
A + B + C is less than or equal to 3 and A > 0, B > 0, and C > 0.

2. The use of a catalyst in accordance with claim 1,
**characterised in that**
the catalyst has a copper oxide/zinc oxide/aluminium oxide spinel with the chemical formula
Cu_{(1-B)}Zn_{B}Al_{C}O₄
where: 0 < B < 1 with B>0.

3. The use of a catalyst in accordance with claim 1,
**characterised in that**
the catalyst has a copper oxide/zinc oxide/aluminium oxide spinel with the chemical formula
Cu_{0.5}Zn_{0.5}Al_{C}O₄.

4. The use of a catalyst in accordance with claim 1,
**characterised in that**
the spinel is used as a shaped body, such as a split Villsz extruded section or a hollow extruded section and in particular a honeycomb body.

5. The use of a catalyst in accordance with claim 1,
**characterised in that**
the percentage by weight of the cerium oxide is between 0.5 and 15 %, in particular between 1 and 8 % by weight.

## Revendications

1. Utilisation d'un catalyseur pour la réduction catalytique d'oxydes d'azote dans des gaz d'échappement oxydés de moteurs diesel ou de moteurs à mélange pauvre, lequel catalyseur se compose d'un spinelle d'oxyde de cuivre, d'oxyde de zinc, d'oxyde d'aluminium de la formule chimique Cu_{A}Zn_{B}Al_{C}O₄,
qui est imprégné en outre d'un ou de plusieurs des éléments : palladium, platine, rhodium, ruthénium, osmium, iridium, rhénium et/ou terres rares telles que le lanthane et cérium, vanadium, titane, niobium, molybdène, tungstène et/ou leurs sels et/ou de oxydes, où A + B + C est inférieur ou égal à 3 et A > 0, B > 0 et C > 0.

2. Utilisation d'un catalyseur selon la revendication 1, **caractérisé en ce que** le catalyseur comprend un spinelle d'oxyde de cuivre, d'oxyde de zinc, d'oxyde d'aluminium de la formule chimique Cu_{(1-B)}Zn_{B}Al₂O₄,
où 0 < B < 1 avec B > 0.

3. Utilisation d'un catalyseur selon la revendication 1, **caractérisé en ce que** le catalyseur comprend un spinelle d'oxyde de cuivre, d'oxyde de zinc, d'oxyde d'aluminium ayant la formule Cu_{0,5}Zn_{0,5}Al₂O₄.

4. Utilisation d'un catalyseur selon la revendication 1, **caractérisé en ce que** le spinelle est introduit sous la forme d'un corps façonné, par exemple sous la forme de barre divisée en granulat, de barre creuse, etc. et en particulier sous la forme d'un corps alvéolé.

5. Utilisation d'un catalyseur selon la revendication 1, **caractérisé en ce que** la partie en poids de l'oxyde de cérium est comprise entre 0,5 % et 15 % en poids, comprise en particulier entre 1 % et 8 % en poids.
